**Europäisches Patentamt**

**European Patent Office**

**Office européen des brevets**

(19)

(11) Numéro de publication: **0 121 450
B1**

(12) **FASCICULE DE BREVET EUROPEEN**

(45) Date de publication du fascicule du brevet:
04.06.86

(51) Int. Cl.⁴: **H 02 B 11/04**, H 01 H 1/42

(21) Numéro de dépôt: **84400360.8**

(22) Date de dépôt: **22.02.84**

(54) Interrupteur ou disjoncteur à pinces d'embrochage perfectionnées.

(30) Priorité: **02.03.83 FR 8303537**

(43) Date de publication de la demande:
**10.10.84 Bulletin 84/41**

(45) Mention de la délivrance du brevet:
**04.06.86 Bulletin 86/23**

(84) Etats contractants désignés:
**BE CH DE GB IT LI NL SE**

(56) Documents cités:
**BE - A - 662 433
DE - B - 1 073 575
FR - A - 2 266 285
FR - A - 2 496 334
US - A - 3 602 680**

(73) Titulaire: **MERLIN GERIN, Rue Henri Tarze,
F-38050 Grenoble Cedex (FR)**

(72) Inventeur: **Lehmann, Jean-Marc, Merlin Gerin,
F-38050 Grenoble Cedex (FR)**
Inventeur: **Macaire, Marcel, Merlin Gerin,
F-38050 Grenoble Cedex (FR)**
Inventeur: **Soboul, Raymond, Merlin Gerin,
F-38050 Grenoble Cedex (FR)**

(74) Mandataire: **Kern, Paul et al, Merlin Gerin Sce.
Brevets 20, rue Henri Tarze, F-38050 Grenoble Cedex
(FR)**

## Description

L'invention est relative à un disjoncteur ou interrupteur débrochable, comprenant par pôle :

— une paire de prises de courant s'étendant parallèlement l'une à l'autre, et reliées électriquement aux contacts de coupure séparables du pôle,

— une paire de pinces d'embrochage agencées aux extrémités des prises pour coopérer avec des plages de contact fixes alignées avec les pinces selon la direction d'embrochage, chaque pince étant munie d'un support conducteur fixé à la face terminale de la prise correspondante, et au moins d'une paire de doigts de contact élémentaires associés à un moyen élastique d'autoserrage, les doigts de contact constitutifs de chaque pince étant montés sur le support fixe conducteur au moyen d'une liaison mécanique autorisant en position débrochée un mouvement relatif des doigts par rapport à la direction d'embrochage,

— et un dispositif de guidage en translation s'étendant selon la direction linéaire d'embrochage pour assurer l'autocentrage de chaque pince avec la plage de contact correspondante.

Selon l'interrupteur débrochable décrit dans le document BE-A-662.433, le dispositif de guidage en translation assurant l'autocentrage de chaque pince avec la plage de contact correspondante est réalisé par la structure particulière des corps isolants des isolateurs de traversée, ayant des épanouissements en forme de godets fixes solidaires du socle, dans lesquels pénètrent coaxialement des raccords tubulaires de l'enveloppe isolante de l'interrupteur. En position embrochée des pinces, un jeu radial important subsiste entre l'épanouissement et le raccord coaxial de chaque pôle, et la pince d'embrochage encaisse les efforts dus aux forces électrodynamiques.

Selon le dispositif décrit dans le document US-A-3.602.680, l'autocentrage des pinces d'embrochage avec les plages de contact correspondantes s'opère au moyen de rainures de centrage ménagées dans le socle isolant fixe et coopérant avec des rebords de positionnement solidaires de la paroi arrière du châssis. Les pinces peuvent être déplacées et guidées en translation par un support coulissant actionné par un mécanisme de commande. Un tel dispositif est applicable à un sectionneur, mais son utilisation pour des disjoncteurs poserait des problèmes de tenue mécanique.

Le comportement d'un disjoncteur à haute tension débrochable doit satisfaire à différentes exigences d'endurance électrique et mécanique. L'influence prépondérante des forces électrodynamiques doit notamment être prise en considération pour les disjoncteurs à hautes performances. Il est classique d'équiper le châssis support du disjoncteur débrochable au moyen d'un système de crantage et/ou d'ancrage destiné à s'opposer aux efforts mécaniques dus aux forces électrodynamiques, de manière à éviter le recul du chariot de sectionnement. La demande de brevet FR-A-2.538.945 fait également connaître une liaison mécanique rigide des pôles d'un disjoncteur. En position embrochée, les pinces d'embrochage agencées aux extrémités des prises de courant de chaque pôle restent néanmoins sous l'influence d'efforts mécaniques résultant de la composante verticale des forces électrodynamiques qui tendent à soulever la pince et la prise de courant associée.

Un premier but de la présente invention consiste à améliorer la tenue mécanique en position embrochée d'un disjoncteur ou interrupteur à hautes performances soumis à l'influence de forces électrodynamiques importantes.

Le disjoncteur selon l'invention est caractérisé par le fait que le support conducteur de chaque pince comporte au moins une glissière ayant une section en forme de U qui délimite un couloir de guidage longitudinal encadrant latéralement la zone d'embrochage ménagée entre les doigts de contact élémentaires de la pince, et que la plage de contact associée pénètre de chant dans le couloir de guidage de la glissière, de manière à assurer un verrouillage positif de la pince en fin de course d'embrochage, ladite pince étant alors bloquée dans toutes les directions autres que la direction d'embrochage.

On remarque qu'en position embrochée du disjoncteur, l'engagement de la plage de contact fixe dans la glissière constitue une liaison mécanique efficace au niveau de chaque pince d'embrochage des différents pôles. L'effet de blocage de la pince peut être renforcé en prévoyant deux glissières symétriques encadrant latéralement la pince et séparées l'une de l'autre par un intervalle correspondant, au jeu près, à la largeur de la plage de contact.

Chaque glissière est isolée et ne sert pas au passage du courant. Le support conducteur de la pince présente une structure en T comprenant une embase destinée à être fixée à la face terminale de la prise de courant selon deux orientations distinctes correspondant respectivement à un embrochage horizontal ou vertical de la pince sur une plage de contact disposée à plat ou de chant, et une branche centrale portant les doigts de contact élémentaires de la pince et la glissière de guidage en U, cette dernière étant solidarisée à la face la plus étroite de la branche.

Un autre but de l'invention consiste à améliorer les performances électriques du disjoncteur, dont chaque pôle comporte une enveloppe étanche remplie de gaz isolant SF6 et renfermant des contacts séparables et un dispositif à autosoufflage.

Selon une caractéristique de l'invention, le contact d'arc fixe est creux, et un radiateur de refroidissement des gaz ionisés est agencé dans la zone supérieure de l'enveloppe étanche entre ledit contact d'arc et le couvercle en forme de cloche. Le radiateur est avantageusement fixé par une vis dans un insert du couvercle. Les gaz ionisés s'échappant par le contact d'arc fixe sont ainsi efficacement refroidis, de manière à éviter un éventuel reclaquage dans la zone d'arc.

Selon une autre caractéristique de l'invention, le contact principal fixe est équipé d'un organe écarteur isolant situé en un endroit prédéterminé de la trajectoire du contact mobile pivotant, de manière à provoquer pendant la course de fermeture un écartement préalable des doigts de contact de la pince avant l'insertion définitive des doigts sur le contact fixe principal.

La présence de l'organe écarteur isolant évite le freinage et un éventuel rebondissement du contact principal mobile dus aux efforts électrodynamiques pendant la fermeture du disjoncteur. Dans le cas d'un contact mobile principal à pinces multiples, il autorise la venue en contact simultanée des pinces avec les doigts du contact principal fixe.

D'autres avantages et caractéristiques ressortiront plus clairement de la description qui va suivre d'un mode de mise en œuvre de l'invention, donné à titre d'exemple non limitatif et représenté aux dessins annexés, dans lesquels:

— la figure 1 est une vue schématique en coupe axiale d'un pôle de disjoncteur selon l'invention;

— les figures 2 et 3 sont des vues partielles à échelle agrandie de la fig. 1, montrant respectivement en coupe et en plan une pince d'embrochage selon l'invention;

— les figures 4 et 5 représentent des vues de profil de la fig. 2, respectivement en positions débrochée et embrochée;

— la figure 6 est une vue analogue à la fig. 2 montrant une variante de réalisation;

— la figure 7 est une vue de profil de la fig. 6 en position embrochée de la pince;

— la figure 8 montre, à échelle agrandie, un détail de réalisation des contacts principaux de la fig. 1.

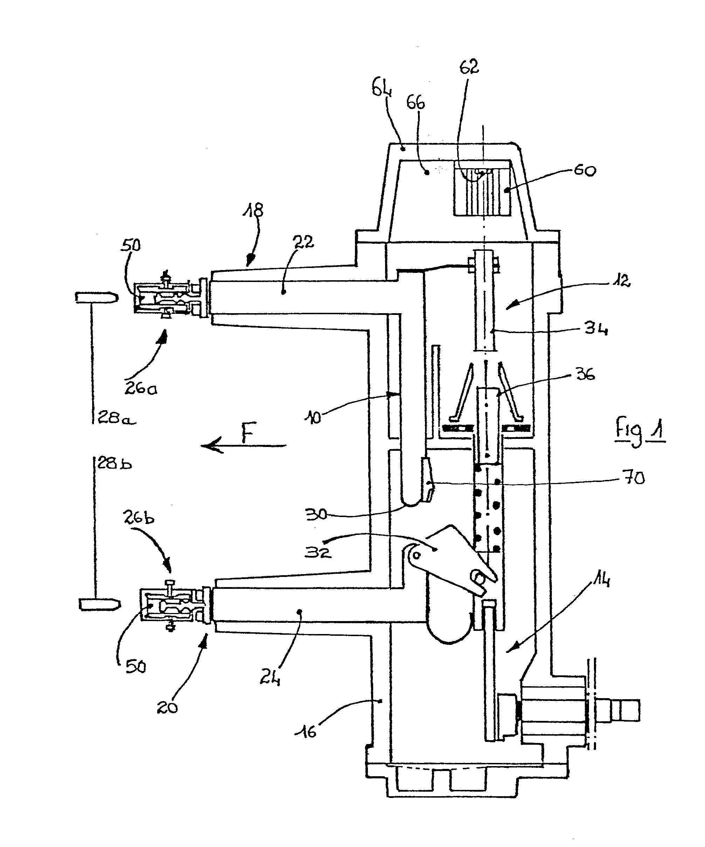

L'invention est décrite par la suite comme étant appliquée à un pôle d'un disjoncteur débrochable à autosoufflage du type décrit dans les demandes de brevets FR-A-2.496.334 et FR-A-2.441.916. Sur la fig. 1, on reconnaît le circuit principal 10 de passage du courant nominal, le circuit auxiliaire 12 de shuntage pour la coupure de l'arc, le mécanisme 14 de commande de l'équipage mobile et l'enveloppe 16 étanche de forme cylindrique allongée, remplie de gaz isolant à rigidité diélectrique élevée, notamment de l'hexafluorure de soufre.

Une paire de traversées 18, 20 d'embrochage est constituée par une prise de courant supérieure 22 et une prise de courant inférieure 24 s'étendant perpendiculairement à l'axe de l'enveloppe 16. L'extrémité de chaque prise 22, 24 est munie d'une pince d'embrochage 26a, 26b coopérant lors de l'insertion du disjoncteur avec une plage de contact 28a, 28b fixe pour le raccordement à un jeu de barre ou à un départ.

Le circuit principal 10 et le circuit auxiliaire 12 d'arc sont connectés en parallèle aux prises de courant 22, 24 à l'intérieur de l'enveloppe 16. Le circuit principal 10 s'étend suivant une trajectoire rectiligne la plus courte entre les deux prises 22, 24, et le circuit auxiliaire 12 est disposé parallèlement et à faible distance du circuit principal 10. La zone de séparation des contacts principaux 30, 32 à l'intérieur de l'enveloppe 16 est nettement espacée de la zone de séparation des contacts d'arc 34, 36 pour éviter une interaction des coupures principale et auxiliaire.

Les pinces d'embrochage 26a, 26b de chaque pôle présentent des structures identiques, et seule l'une d'elles sera décrite en détail par la suite en référence aux figures 2 à 5. La pince 26a est formée par au moins une paire de doigts de contact 37 montés avec un certain jeu sur un support 38 conducteur en forme de T dont l'embase 40 est fixée à la face terminale de la prise de courant 22 par deux vis de fixation 42. Les doigts de contact 37 de chaque paire se trouvent en porte à faux sur les faces opposées de la branche 39 centrale perpendiculaire à l'embase 40 du support 38 fixe. Deux ressorts 44 de compression prennent appui sur les faces extérieures des deux contacts 37 sollicités élastiquement l'un vers l'autre jusqu'à un écartement minimum d (fig. 2 et 4) déterminé par une butée 46 intercalaire logée entre les faces internes des doigts de contact 37. La pince 26a est agencée horizontalement et comporte à titre d'exemple deux paires de contact 37 parallèles et juxtaposées transversalement sur la branche 39 centrale du support 38, mais il est entendu qu'un nombre différent de paires de contact 37 peut être utilisé en fonction du calibre choisi. L'entrée 48 de la pince 26a d'embrochage est évasée pour faciliter son insertion (flèche F, fig. 1) par translation sur la plage de contact 28a fixe. Une telle pince d'embrochage est bien connue des spécialistes.

Selon l'invention, la pince d'embrochage 26a (fig. 1 à 5) horizontale comporte une paire de glissières 50, 52 latérales de guidage en forme d'étriers en U, disposées horizontalement de part et d'autre des doigts de contact 37.

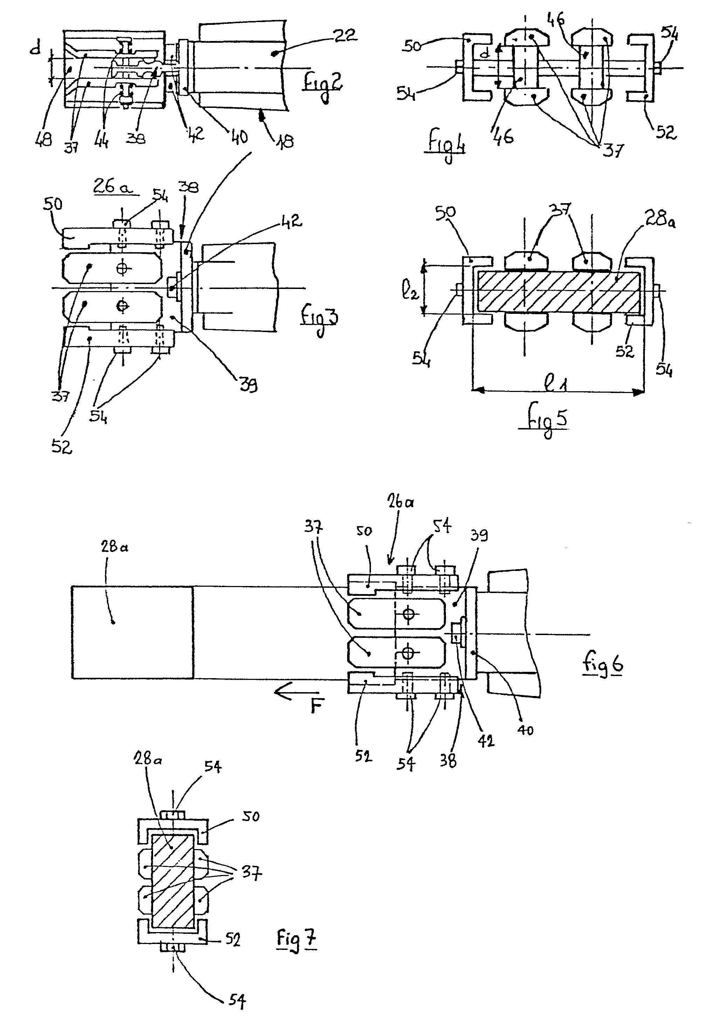

Les glissières 50, 52 symétriques par rapport au plan médian du support 38 sont solidarisées à ce dernier par des vis de fixation 54 introduites dans les chants opposés de la branche centrale 39. L'écartement $l_1$ transversal ménagé entre les âmes parallèles des deux glissières 50, 52, et la distance $l_2$ séparant verticalement les ailes recourbées du U de chaque glissière sont légèrement supérieurs aux dimensions de la plage de contact 28a horizontale (fig. 5). L'étrier des glissières 50, 52 est réalisé en matériau métallique, notamment amagnétique, recouvert par un revêtement isolant. Les deux glissières 50, 52 restent fixes par rapport au support 38, tandis que les doigts de contact 37 peuvent s'autocentrer lors de l'embrochage.

En position débrochée (fig. 1 et 4), l'écartement d minimum entre les doigts de contact 37 constitutifs de chaque paire est inférieur à la distance $l_2$ des ailes de chaque glissière 50, 52.

Au début de la course d'embrochage, les deux glissières 50, 52 de guidage s'engagent sur les flancs opposés de la plage de contact 28a horizontale pour assurer un autocentrage préalable de la pince 26a dans la direction d'embrochage. L'écartement des doigts de contact 37 à l'encontre de l'action de compression des ressorts 44 s'opère ensuite au cours de la course poursuivie d'embrochage. En position embrochée (fig. 5) de la pince 26a, la plage de contact 28a est emprisonnée entre les deux glissières 50, 52. Les efforts mécaniques dus aux forces électrodynamiques ou à des chocs extérieurs sont encaissés par les glissières 50, 52 fixes et la pince 26a reste immobile grâce à son blocage dans les directions transversale et verticale.

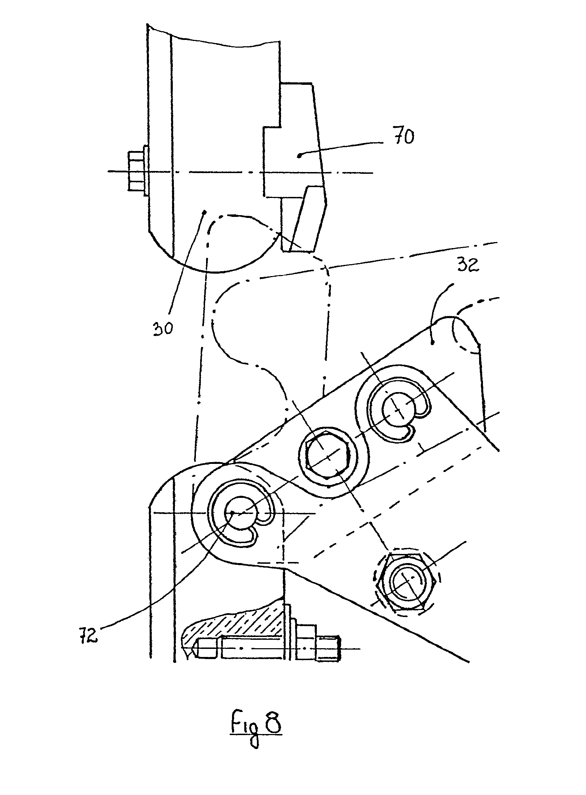

En référence aux figures 6 et 7, l'orientation de la pince d'embrochage 26a est différente de celle du dispositif des fig. 1 à 5, grâce à un pivotement de 90 degrés de l'ensemble pince 26a et glissières 50, 52. La pince 26a s'étend dans un plan vertical et coopère lors de l'embrochage avec une plage de contact 28a verticale. La présence des glissières supérieure 50 et inférieure 52 assure d'une manière similaire l'autocentrage de la pince et son blocage en position embrochée, et empêche le soulèvement du disjoncteur sous l'action d'efforts électrodynamiques importants. Elle empêche également les déplacements latéraux dus aux efforts électrodynamiques entre phases.

L'influence de ces efforts électrodynamiques proportionnels au courant est d'autant plus importante pour les disjoncteurs à fortes performances ayant un pouvoir de coupure élevé.

Selon une autre caractéristique de l'invention, la coupure de l'arc par le circuit auxiliaire 12 est améliorée grâce à la présence d'un radiateur 60 de refroidissement des gaz ionisés à l'intérieur de l'enveloppe 16. La radiateur 60 est situé dans la zone supérieure de l'enveloppe 16 étanche en étant solidarisé par une vis 62 dans un insert du couvercle 64 (fig. 1). Le couvercle 64 présente une forme en cloche qui délimite un volume amont 66 de logement du radiateur 60. Ce dernier est disposé sur le trajet des gaz ionisés s'échappant vers le volume 66 amont à travers le contact d'arc 34 fixe creux. L'action combinée du volume 66 et du radiateur 60 permet d'allonger le trajet des gaz d'échappement et de les refroidir efficacement afin de rendre impossible tout reclaquage entre les contacts d'arc 34, 36.

Sur la figure 8 est illustré le système de contacts principaux 30, 32 du circuit 10 de la fig. 1. Au contact principal fixe 30 est associé un organe écarteur 70 isolant coopérant avec la pince du contact principal mobile 32, monté à pivotement sur un axe 72. L'organe écarteur 70 fait saillie du contact fixe 30 et est placé le long de la trajectoire du contact mobile 32, de manière à provoquer pendant la fermeture du disjoncteur un écartement préalable des doigts de contact de la pince avant l'insertion définitive des doigts sur le contact fixe 30 principal.

## Revendications

1. Disjoncteur ou interrupteur débrochable, comprenant par pôle :
— une paire de prises (22, 24) de courant s'étendant parallèlement l'une à l'autre, et reliées électriquement aux contacts de coupure (30, 32 ; 34, 36) séparables du pôle,
— une paire de pinces d'embrochage (26a, 26b) agencées aux extrémités des prises (22, 24) pour coopérer avec des plages de contact fixes (28a, 28b) alignées avec les pinces selon la direction d'embrochage, chaque pince étant munie d'un support (38) conducteur fixé à la face terminale de la prise correspondante, et au moins d'une paire de doigts de contact (37) élémentaires associés à un moyen élastique (44) d'autoserrage, les doigts de contact (37) constitutifs de chaque pince (26a, 26b) étant montés sur le support (38) fixe conducteur au moyen d'une liaison mécanique autorisant en position débrochée un mouvement relatif des doigts par rapport à la direction d'embrochage,
— et un dispositif de guidage en translation s'étendant selon la direction linéaire d'embrochage pour assurer l'autocentrage de chaque pince (26a, 26b) avec la plage de contact correspondante (28a, 28b), caractérisé par le fait que le support (38) conducteur de chaque pince (26a, 26b) comporte au moins une glissière (50, 52) ayant une section en forme de U qui délimite un couloir de guidage longitudinal encadrant latéralement la zone d'embrochage ménagée entre les doigts de contact (37) élémentaires de la pince (26a, 26b), et que la plage de contact (28a, 28b) associée pénètre de chant dans le couloir de guidage de la glissière (50, 52), de manière à assurer un verrouillage positif de la pince (26a, 26b) en fin de course d'embrochage, ladite pince étant alors bloquée dans toutes les directions autres que la direction d'embrochage.

2. Disjoncteur selon la revendication 1, caractérisé en ce que la glissière (50, 52) en U est dotée d'une âme centrale solidarisée au support (38) par des moyens de fixation (54), et de deux ailes parallèles disposées en regard des faces latérales des doigts de contact (37) de la pince.

3. Disjoncteur selon l'une des revendications 1 ou 2, caractérisé en ce que deux glissières (50, 52) sont agencées symétriquement de part et d'autre des doigts de contact (37) de chaque pince (26a, 26b), et que l'intervalle de séparation des deux glissières (50, 52) correspond au jeu près à la largeur de la plage de contact (28a, 28b).

4. Disjoncteur selon l'une des revendications 1, 2 ou 3, caractérisé en ce que le support (38) conducteur de la pince (26a, 26b) présente une structure en T comprenant une embase (40) destinée à être fixée à la face terminale de la prise de courant (22, 24) selon deux orientations distinctes correspondant respectivement à un embrochage horizontal ou vertical de la pince (26a, 26b) sur une plage de contact (28a, 28b) disposée à plat ou de chant, et une branche (39) centrale portant les doigts de contact (37) élémentaires de la pince et la glissière (50, 52) de guidage en U, cette dernière étant solidarisée à la face la plus étroite de la branche (39).

5. Disjoncteur selon l'une des revendications 1 à 4, caractérisé en ce que la glissière de guidage (50, 52) est en matériau métallique, notamment amagnétique, recouvert par un revêtement isolant.

6. Disjoncteur selon l'une des revendications 1 à 5, comprenant par pôle une enveloppe étanche remplie de gaz isolant à rigidité diélectrique élevée et renfermant les parties actives et un dispositif d'autosoufflage à cylindre et piston de compression du gaz dans un volume pistonnable en communication avec la zone d'arc, agencée entre les contacts d'arc séparables, caractérisé par le fait que le contact d'arc (34) fixe est creux, et qu'un radiateur (60) de refroidissement des gaz ionisés est agencé dans la zone supérieure de l'enveloppe (16) étanche entre ledit contact d'arc (34) et le couvercle (64) en forme de cloche.

7. Disjoncteur selon la revendication 6, caractérisé en ce que le radiateur (60) est fixé par une vis (62) dans un insert du couvercle (64).

8. Disjoncteur selon l'une des revendications 1 à 7, comprenant un circuit principal de passage du courant nominal doté d'un contact principal fixe et d'un contact principal mobile pivotant en forme de pince, caractérisé en ce que le contact principal fixe (30) est équipé d'un organe écarteur (70) isolant situé en un endroit prédéterminé de la trajectoire du contact mobile (32) pivotant, de manière à provoquer pendant la course de fermeture un écartement préalable des doigts de contact de la pince avant l'insertion définitive des doigts sur le contact fixe (30) principal.

## Claims

1. Draw-out switch or circuit breaker comprising per pole:
— a pair of connectors (22, 24) extending parallelly one to the other and connected electrically with the separable switching contacts (30, 32; 34, 36) of the pole,
— a pair of contact clamps (26a, 26b) fitted at the ends of the connectors (22, 24) to cooperate with stationary contact terminal pads (28a, 28b) aligned with the clamps in the engagement direction, each clamp being provided with a conductor support (38) fixed to the terminal face of the corresponding connector, and at least a pair of elementary contact fingers (37) associated with an elastic self-tightening element (44), the contact fingers (37) constituting each clamp (26a, 26b) being mounted on the fixed conductor support (38) by means of a mechanical connection enabling in the retracted position a relative movement of the fingers in relation to the engagement direction,
— and a translation guiding device extending in the linear engagement direction in order to ensure the self-tightening of each clamp (26a, 26b) with the corresponding contact terminal pad (28a, 28b), characterized by the fact that the conductor support (38) of each clamp (26a, 26b) comprises at least a slide (50, 52) of U-shaped section to define a longitudinal guiding passage enclosing laterally the engagement area provided between the elementary contact fingers of the clamp (26a, 26b), and that the associated contact terminal pad (28a, 28b) enters with its front side the guiding passage of the slide (50, 52) in order to ensure a positive locking of the clamp (26a, 26b) at the end of the engagement travel, said clamp being locked in all directions except the engagement direction.

2. Switch according to claim 1, characterized in that the U-shaped slide (50, 52) is provided with a central body secured to support (38) by fixing means (54), and two parallel wings disposed facing the side faces of the contact fingers (37) of the clamp.

3. Switch according to claim 2, characterized in that the two slides (50, 52) are arranged symmetrically on both sides of the contact fingers (37) of each clamp (26a, 26b) and that the distance separating the two slides (50, 52) corresponds to the width of the contact terminal pad (28a, 28b) allowing for clearance.

4. Switch according to claim 1, 2 or 3, characterized in that the conductor support (38) of clamp (26a, 26b) has a T-shaped structure comprising a coupling connector (40) designed to be fixed to the terminal face of the connector (22, 24) according to two distinct orientations corresponding respectively to a horizontal or vertical engagement of the clamp (26a, 26b) on a flat or edgewise contact terminal pad (28a, 28b), and a central branch (39) bearing the elementary contact fingers (37) of the clamp and the U-shaped guiding slide (50, 52), the latter being secured to the narrowest face of the branch (39).

5. Switch according to one of the claims 1-4, characterized in that the guiding slide (50-52) is made of metallic material, in particular a nonmagnetic metal, covered with an insulating coating.

6. Switch according to one of the claims 1-5, comprising per pole a sealed enclosure filled with high dielectric strength insulating gas, and enclosing the active parts and a cylinder and gas compression piston self-blowing device, in a pistonnable volume communicating with the arc area, disposed between separable arc contacts, characterized by the fact that the fixed arc contact is hollow, and that an ionized gas cooling radiator (60) is fitted in the upper part of the sealed enclosure (16) between said arc contact (34) and the bell-shaped cover (64).

7. Switch according to claim 6, characterized in that the radiator (60) is fixed by a screw in an insert of cover (64).

8. Switch according to one of the claims 1-7, comprising a main rated current flow circuit (10) fitted with a fixed main contact and a pivoting movable main contact in the form of a clamp, characterized in that the fixed main contact (30) is fitted with an insulating separating device (70) located at a predetermined point on the pivoting movable contact (32) path, so as to cause the contact fingers of the clamp to separate during closing travel before the fingers are definitively inserted on the fixed main contact (30).

## Patentansprüche

1. Ausfahrbarer Leistungs- oder Lastschalter mit je Pol:
— einem Paar Steckverbindungen (22, 24), die sich parallel zueinander erstrecken und elektrisch mit den trennbaren Abschaltkontakten (30, 32; 34, 36) des Pols verbunden sind,
— einem Paar Einschub-Kontaktklemmen (26a, 26b), die an den Enden der Steckverbindungen (22, 24) angeordnet sind, um mit ortsfesten Kontaktfahnen (28a, 28b) zusammenzuarbeiten, die mit den Kontaktklemmen in der Einschubrichtung ausgerichtet sind, wobei jede Kontaktklemme einen ortsfesten leitende Träger (38) aufweist, der mit der Endseite der entsprechenden Steckverbindung verbunden ist, und wenigstens ein Paar elementare Kontaktfinger (37), die einem elastischen Selbstklemmittel (44) zugeordnet sind, wobei die Kontaktfinger (37) jeder Klemme (26a, 26b) auf dem ortsfesten leitenden Träger (38) montiert sind mit Hilfe einer mechanischen Verbindung, die in ausgefahrener Stellung eine relative Bewegung der Finger in Bezug auf die Einschubrichtung erlaubt,

— einer Translationsführungsvorrichtung, die sich gemäss der linearen Einschubrichtung erstreckt, um die Selbstzentrierung jeder Kontaktklemme (26a, 26b) mit der entsprechenden Kontaktfahne (28a, 28b) zu gewährleisten, dadurch gekennzeichnet, dass der leitende Träger (38) jeder Kontaktklemme (26a, 26b) wenigstens eine U-förmige Führungsschiene (50, 52) aufweist, die einen länglichen Führungsdurchgang begrenzt, der seitlich den zwischen den elementaren Kontaktfingern (37) der Kontaktklemme (26a, 26b) angeordneten Einschub-Bereich umgreift, und dass die zugeordnete Kontaktfahne (28a, 28b) stirnseitig in den Führungsdurchgang der Führungsschiene (50, 52) eindringt, um eine positive Verriegelung der Kontaktklemme (26a, 26b) am Ende des Einschubweges zu gewährleisten, wobei die genannte Klemme dann in allen Richtungen, ausser in der Einschubrichtung, gesperrt ist.

2. Schalter gemäss Anspruch 1, dadurch gekennzeichnet, dass die U-förmige Führungsschiene (50, 52) mit einer Mittel-Seele versehen ist, die mit dem Träger (38) durch Befestigungsmittel (54) verbunden ist, sowie mit zwei parallelen Flügeln, die gegenüber der Seitenflächen der Kontaktfinger (37) der Kontaktklemme angeordnet sind.

3. Schalter gemäss Anspruch 1 oder 2, dadurch gekennzeichnet, dass die beiden Führungsschienen (50, 52) symmetrisch diesseits und jenseits der Kontaktfinger (37) jeder Kontaktklemme (26a, 26b) angeordnet sind, und dass der Trenn-Zwischenraum der beiden Führungsschienen (50, 52), das Spiel ausgenommen, der Breite der Kontaktfahne (28a, 28b) entspricht.

4. Schalter gemäss Anspruch 1, 2 oder 3, dadurch gekennzeichnet, dass der leitende Träger (38) der Kontaktklemme (26a, 26b) eine T-förmige Struktur aufweist mit einer Sohle (40), die dazu bestimmt ist, an der Endseite der Steckverbindung (22, 24) befestigt zu werden gemäss zwei verschiedenen Richtungen, die einem waagerechten bzw. senkrechten Einschub der Kontaktklemme (26a, 26b) in eine flach oder aufrecht angeordnete Kontaktfahne (28a, 28b) entsprechen, und einen zentralen Zweig (39), der die elementaren Kontaktfinger (37) der Kontaktklemme und die U-förmige Führungsschiene (50, 52) trägt, wobei letztere mit der schmalsten Seite des Zweiges (39) verbunden ist.

5. Schalter gemäss einem der Ansprüche 1-4, dadurch gekennzeichnet, dass die Führungsschiene (50, 52) aus Metall besteht, insbesondere unmagnetisches Metall, mit einer Isolierschicht überzogen.

6. Schalter gemäss einem der Ansprüche 1-5, der je Pol ein gasdichtes Gehäuse aufweist, welches mit Isoliergas von hoher dielektrischer Festigkeit gefüllt ist und die aktiven Teile enthält, und eine Selbstblasvorrichtung mit Zylinder und Gaskompressions-Kolben in einem kompressionsfähigen Raum, der mit dem Lichtbogenbereich in Verbindung steht, der zwischen den trennbaren Lichtbogenkontakten angeordnet ist, dadurch gekennzeichnet, dass der ortsfeste Lichtbogenkontakt (34) hohl ist, und dass ein Kühler (60) zum Kühlen der ionisierten Gase in dem oberen Bereich des dichten Gehäuses (16) angeordnet ist, zwischen dem genannten Lichtbogenkontakt (34) und dem glockenförmigen Deckel (64).

7. Schalter gemäss Anspruch 6, dadurch gekennzeichnet, dass der Kühler (60) durch eine Schraube (62) in einer Einlage des Deckels (64) befestigt ist.

8. Schalter gemäss irgendeinem der Ansprüche 1-7, mit einem Hauptstromkreis zum Durchgang des Nennstromes, der mit einem ortsfesten Hauptkontakt und mit einem beweglichen, schwenkbaren, klemmenförmigen Hauptkontakt versehen ist, dadurch gekennzeichnet, dass der ortsfeste Hauptkontakt (30) mit einem isolierenden Spreizorgan (70) ausgestattet ist, das sich an einer vorbestimmten Stelle der Bahn des beweglichen, schwenkbaren Kontaktes (32) befindet, um während des Schliessweges vorher ein Spreizen der Kontaktfinger der Kontaktklemmen zu bewirken, vor dem endgültigen Einführen der Finger auf den ortsfesten Hauptkontakt (30).

Fig 1

Fig2

Fig4

Fig3

Fig5

Fig6

Fig7

Fig 8